# EUROPÄISCHE PATENTANMELDUNG

(11) **EP 0 763 380 A1**
(43) Veröffentlichungstag der Anmeldung: **19.03.1997**
(21) Anmeldenummer: 96114446.6
(22) Anmeldetag: 10.09.1996
(51) Int. Cl.: B01J 35/00, B01J 37/02, B01D 53/86, B01D 53/94

(54) **Schalenkatalysatoren**

(30) Priorität: 18.09.1995 DE 19534497
(71) Anmelder: BASF AKTIENGESELLSCHAFT, 67056 Ludwigshafen (DE)
(72) Erfinder: Morsbach, Bernd, 67069 Ludwigshafen (DE)

(57) **Zusammenfassung**

Schalenkatalysatoren bestehend aus einem Kern und mindestens einer äußeren Schale oder aus einem Träger, mindestens einer inneren und mindestens einer äußeren Schale, in denen der Kern oder die inneren Schalen aus Edelmetall enthaltenden Oxidschichten besteht und die äußeren Schalen die Komponenten A und C oder A, B und C enthalten
in der
- A: ein Oxid der Elemente Titan, Aluminium, Zirkon oder deren Gemische,
- B: ein Oxid der Elemente Molybdän, Wolfram oder deren Gemische und
- C: ein Oxid oder Sulfat der Elemente Vanadin, Eisen, Mangan, Nickel, Kobalt, Chrom, Kupfer, Niob, Zinn oder deren Gemische
bedeuten, wobei Träger, Kern und jede Schale gegebenenfalls zusätzlich ein Oxid oder Sulfat der Elemente Silicium, Barium, Zink oder deren Gemische, anorganische Fasern, Ton oder deren Gemische enthält, sowie ein Verfahren zur katalytischen Entfernung von Stickstoffmonoxid, Kohlenmonoxid und Kohlenwasserstoffen aus sauerstoffhaltigen Verbrennungsgasen, vorzugsweise aus Abgasen aus Verbrennungsmotoren mit O₂-Überschuß, mittels der zuvor genannten Katalysatoren.

## Beschreibung

Die vorliegende Erfindung betrifft Schalenkatalysatoren bestehend aus einem Kern und mindestens einer äußeren Schale oder aus einem Träger, mindestens einer inneren und mindestens einer äußeren Schale, wobei der Kern oder die inneren Schalen aus Edelmetall enthaltenden Oxidschichten besteht und die äußeren Schalen bestimmte Oxide und gegebenenfalls Sulfate enthalten und der Träger, Kern und jede Schale gegebenenfalls zusätzlich ein Oxid oder Sulfat der Elemente Silicium, Barium, Zink oder deren Gemische, anorganische Fasern, Ton oder deren Gemische enthalten kann, sowie ein Verfahren zur katalytischen Entfernung von Stickstoffoxiden, Kohlenmonoxid und Kohlenwasserstoffen aus sauerstoffhaltigen Verbrennungsgasen bei erhöhten Temperaturen.

Beispielsweise aus DE-A-38 04 722, EP-A-494 591 und EP-A-514 682 sind Katalysatoren bekannt, die in ihren Zusammensetzung die Komponenten A bis D enthalten.

So sind z.B. aus EP-A-494 591 Pt-, Pd- und Rh-haltige Katalysatoren für die Oxidation von CO und HC in Anwesenheit von O₂ und NO in dem überstöchiometrischen Abgas eines Dieselmotors bekannt. Beispiele hinsichtlich CO und HC sind die platin-, palladium- und rhodiumhaltigen Autoabgaskatalysatoren; hinsichtlich NH₃, die hauptsächlich platinhaltigen Katalysatornetze der NH₃-Verbrennung in Salpetersäure-Anlagen.

Beim Verfahren zur selektiven katalytischen Reduktionen von NOx aus Abgasen von Verbrennugsmotoren mit anschließender katalytischer Oxidation von CO, HC und überschüssigen NH₃ ist aus EP-A-410 440 und unterschiedlichen Anwendungen bekannt. In dieser Anwendung wird aber auch auf den Nachteil dieses Verfahrens hingewiesen (Seite 2, Zeilen 41 bis 43). Die üblicherweise verwendeten Oxidationskatalysatoren erzeugen bei der Umsetzung von überschüssigem NH₃ zumindestens teilweise neues NOx. Als Abhilfe wird dort vorgeschlagen, das überschüssige NH₃ durch eine entsprechende Regelung zu minimieren. Eine solche Regelung ist bei einem Fahrzeugmotor jedoch praktisch kaum zu realisieren, da einerseits im Fahrzeugbetrieb extrem schwankende Betriebsbedingungen auftreten und andererseits nur eine einfache Regelung ohne Konzentrationsmessung ökonomisch zu vertreten ist.

Die bislang bekannten Katalysatoren haben den Nachteil, daß man bisher zwei unterschiedliche Katalysatoren hintereinander anordnen mußte, wodurch die Neubildung von NO bei der Zerstörung des Restes NH₃ nicht unterdrückt werden kann.

Der vorliegenden Erfindung lag daher die Aufgabe zugrunde, den zuvor genannten Nachteilen abzuhelfen.

Die vorliegende Erfindung betrifft neue und verbesserte Schalenkatalysatoren bestehend aus einem Kern und mindestens einer äußeren Schale oder aus einem Träger, mindestens einer inneren und mindestens einer äußeren Schale, welche dadurch gekennzeichnet sind, daß der Kern oder die inneren Schalen aus Edelmetall enthaltenden Oxidschichten besteht und die äußeren Schalen die Komponenten A und C oder A, B und C enthalten
in der
- A: ein Oxid der Elemente Titan, Aluminium, Zirkon oder deren Gemische,
- B: ein Oxid der Elemente Molybdän, Wolfram oder deren Gemische und
- C: ein Oxid oder Sulfat der Elemente Vanadin, Eisen, Mangan, Nickel, Kobalt, Chrom, Kupfer, Niob, Zinn oder deren Gemische
bedeuten, wobei Träger, Kern und jede Schale gegebenenfalls zusätzlich ein Oxid oder Sulfat der Elemente Silicium, Barium, Zink oder deren Gemische, anorganische Fasern, Ton oder deren Gemische enthält, sowie ein Verfahren zur katalytischen Entfernung von Stickstoffmonoxid, Kohlenmonoxid und Kohlenwaserstoffen aus sauerstoffhaltigen Verbrennungsgasen, vorzugsweise aus Abgasen aus Verbrennungsmotoren mit O₂-Überschuß, mittels der zuvor genannten Katalysatoren.

Die erfindungsgemäßen Katalysatoren haben folgende Zusammensetzungen:

Die Katalysatoren sind aus einem Kern und mindestens einer, also einer bis sechs, äußeren Schicht, bevorzugt einer bis drei äußeren Schichten, besonders bevorzugt einer oder zwei äußeren Schichten, oder einem Träger, mindestens einer inneren und mindestens einer, also einer bis sechs, inneren und äußeren Schichten, bevorzugt einer bis drei inneren und äußeren Schichten, besonders bevorzugt einer oder zwei inneren und äußeren Schichten aufgebaut, wobei die äußeren, dem Gasström zugewandte Schichten aus den Komponenten A und C oder A, B und C bestehen. Die inneren Schichten, die direkt unter den äußeren angeordnet sind, besteht aus den Komponenten A bis D, mindestens jedoch aus A und D.

Neben diesen Elementen können noch weitere Komponente enthalten sein, die in der Regel nicht zur katalytischen Aktivität beitragen, wie beispielsweise Silicium, Barium oder Zink in Form von Oxiden oder Sulfaten sowie anorganische Fasern zur Steigerung der Festigkeit und Ton zur Verbesserung der Extrusionsfähigkeit.

Unterhalb der inneren Schicht können noch weitere Schichten liegen, die entweder aus den Komponenten A bis C oder aus einem innerten Träger wie beispielsweise Cordiorit oder Mullit oder einem metallischen Träger oder einem Glasträger mit oxidischer Haftschicht bestehen.

Die Komponente A besteht aus mindestens einem Oxid der Elemente Titan, Aluminium oder Zirkon wie TiO₂ als Anatas oder als Rutil, Al₂O₃ als α-Al₂O₃ oder γ-Al₂O₃ und ZrO₂, bevorzugt TiO₂ als Anatas, Al₂O₃ als γ-Al₂O₃ und ZrO₂, besonders bevorzugt TiO₂ als Anatas.

Die Komponente B besteht mindestens aus einem Oxid der Elemente Molybdän und Wolfram, bevorzugt WO₃, besonders bevorzugt WO₃ in einer innigen Mischung mit TiO₂ (Anatas) als Komponente A hergestellt in einer gemeinsamen Fällung.

Die Komponente C besteht mindestens aus einem Oxid oder Sulfat der Elemente Vanadin, Eisen, Nickel, Kobald, Chrom, Kupfer, Niob, Mangan oder Zinn wie Kupferoxid, Chromoxid, Nioboxid, Kobaldoxid und Vanadiumoxid, bevorzugt amorphes Chromoxid und Vanadiumoxid, besonders bevorzugt Vanadiumoxid als V₂O₅.

Als Edelmetalle eignen sich mindestens eines, also eines bis drei, der Elemente Platin, Palladium oder Rhodium, bevorzugt Platin und Palladium, besonders bevorzugt Platin.

Die Komponente A und C und gegebenenfalls B der äußeren Schalen liegen in der Regel zueinander mit mindestens 50 Gew.-%, also 50 bis 99 Gew.-%, bevorzugt 70 bis 95 Gew.-%, besonders bevorzugt 75 bis 90 Gew.-% der Komponente A, mit maximal 50 Gew.-%, also 0 bis 50 Gew.-%, bevorzugt 3 bis 30 Gew.-%, besonders bevorzugt 5 bis 15 Gew.-% der Komponente B, mit maximal 40 Gew.-%, also 0,01 bis 40 Gew.-%, bevorzugt 0,1 bis 10 Gew.-%, besonders bevorzugt 0,3 bis 3 Gew.-% der Komponente C vor.

Die Schalenkatalysatoren enthalten im Kern oder in der inneren Schale maximal 10 Gew.-%, also 0,001 bis 10 Gew.-% eines Edelmetalls, bevorzugt 0,01 bis 10 Gew.-%, besonders bevorzugt 0,02 bis 0,5 Gew.-%.

Die Dicke der äußeren und der inneren Schicht betragen jeweils 0,001 bis 3 mm vorzugsweise 0,01 bis 0,3 mm. Die Dicke der darunterliegenden Schichten bzw. des Kerns ergibt sich aus der gewählten geometrischen Form des Katalysators und beträgt in der Regel von 0,01 bis 20 mm, bevorzugt 0,05 bis 6 mm, besonders bevorzugt 0,1 bis 0,4 mm bei Wabenkatalysatoren. Der Katalysator kann als Schüttgut-Katalysator in Form von Strangpresslingen, Kugeln oder Tabletten oder vorzugsweise als Wabenkatalysator hergestellt werden. Die Wabenstruktur kann dabei durch Extrusion des katalytischen Materials oder eines keramischen Trägers oder durch Zusammenfügen entsprechender geformter Platten aus dem katalytischen Material zustande kommen bzw. durch Trägerplatten, die mit dem katalytisch aktiven Material beschichtet sind.

Neben der oben beschriebenen Ausführungsform des Katalysators ist noch eine weitere spezielle Ausführungsform möglich, bei der die äußere Schicht aus den Komponenten A bis C und Palladium besteht und die innere Schicht aus den Komponenten A bis C und Platin.

Die erfindungsgemäßen Schalenkatalysatoren können wie folgt hergestellt werden:

Auf einem keramischen Träger, beispielsweise aus Cordiorit, oder einem metallischen Träger mit einer haftfähigen Oberfläche kann zunächst die katalytisch aktive innere Schicht aufgebracht werden. Zu diesem Zweck wird in der Regel ein Schlicker aus den Komponenten A bis C und dem Edelmetall hergestellt und der Kataysator darin getaucht. Die Schicht kann in bekannter Weise durch die Einstellung der reologischen Eigenschaften des Schlickers eingestellt werden. Dies geschieht in der Regel durch die Zumischung von Stellmitteln, die die Filmdicke des ablaufenden Schlickers beeinflussen. Die so aufgezogene Schicht wird in der Regel getrocknet und calciniert. Die Calcinierung kann aber auch zusammen mit der anschließend aufgebrachten Schicht erfolgen. Alternativ ist auch das Aufbringen der inneren Schicht ohne das Edelmetall möglich. In diesem Fall wird das Edelmetall anschließend durch Tränkung aufgebracht. Bei Wabenkatalysatoren, die aus Platten aufgebaut werden, kann auch ein Aufsprühen, Auftränken oder Aufwalzen der katalytisch aktiven Masse auf die Trägerplatten vorteilhaft sein. Bei Schüttgut-Katalysatoren sind anstelle der Tauchung auch ein Aufrollen in einem Pelletierteller oder ähnliche Techniken anwendbar.

Die äußere Schicht kann in analoger Weise auf die innere Schicht aufgebracht und anschließend calciniert werden.

Anstelle des keramischen Trägers kann auch ein Katalysatorkörper, bestehend aus den Komponenten A bis C oder A und C und einem Edelmetall, bevorzugt ein Wabenkörper oder auch ein Schüttgut, verwendet werden, der die innere Schicht bildet. Eine weitere Ausführungsform ist ein Wabenkörper oder ein Schüttgut, bestehend aus den Komponenten A bis C oder A und C, auf das ein Edelmetall aufgetränkt wird. In beiden Fällen wird anschießend die äußere Schicht bestehend aus A bis C oder A und C aufgebracht.

Außerdem kann ein Wabenkörper oder ein Schüttgut, bestehend aus den Komponenten A bis C oder A und C, mit einem Edelmetall in der Weise getränkt werden, daß das Edelmetall in einer Schicht unterhalb der Oberfläche gegenüber dem Rest des Katalysatorkörpers stark angereichert ist. Dies läßt sich beispielsweise mit erwärmten Wabenkörpern oder Schüttgütern bewerkstelligen. Auch auf diese Weise stellt sich eine Struktur mit einer äußeren Schicht, bestehend aus A und C oder aus A, B und C, und einer inneren Schicht, bestehend aus A und C oder aus A, B und C mit einem Edelmetall, ein.

Das erfindungsgemäße Verfahren läßt sich wie folgt durchführen:

Man kann die katalytische Entfernung von Stickstoffmonoxid, Kohlenmonoxid und Kohlenwasserstoffen aus sauerstoffhaltigen Verbrennungsgasen, vorzugsweise aus Abgasen aus Verbrennungsmotoren mit O₂-Überschuß, durch in Kontakt bringen mit einem der zuvor beschriebenen Schalenkatalysator bei Temperaturen von 50 bis 800°C, bevorzugt 100 bis 700°C, besonders bevorzugt 150 bis 550°C und einem Druck von 0,01 bis 200 bar, bevorzugt 0,1 bis 20 bar, besonders bevorzugt 0,5 bis 5 bar durchführen.

In einer bevorzugten Ausführungsform besteht das Verfahren aus einer Regelungs- und Dosierungseinheit für ein NH₃-haltiges oder NH₃-freisetzendes Reduktionsmittel, einer Einmischung des Reduktionsmittels in den Abgasstrom und einen katalytischen Reaktor in dem das Gas mit dem der Katalysator in Kontakt gebracht wird.

Der Stand der Technik wird durch die erfindungsgemäßen Schalenkatalysatoren in der Weise verbessert, daß diese aus einer äußeren Schicht bestehen, in der NO mit NH₃ zu N₂ und H₂O umgesetzt überschüssiges NH₃ sowohl zu N₂ und H₂O als auch zu NO umgesetzt wird. Im Überschuß vorhandenes NH₃ diffundiert durch die äußere Schicht hindurch und wird an der inneren Schicht zumindestens teilweise in NO umgesetzt. Daß dort gebildete NO diffundiert wieder durch die äußere Schicht hindurch und setzt sich dort mit dem im Überschuß vorhandenen NH₃ zu N₂ und H₂O um. Auf diese Weise wird an den Schalenkatalysatoren nicht nur NOx mit NH₃ zu N₂ und H₂O umgesetzt, sondern auch evtl. auch im Überschuß vorhandenes NH₃ zu N₂ und H₂O ohne Neubildung von NOx umgesetzt. Ferner läßt sich an den erfindungsgemäßen Schalenkatalysatoren auch die Oxidation von Kohlenmonoxid und Kohlenwasserstoffen durchführen.

### Beispiele

### Grundträger A

### Herstellung der Grundträgers

35 kg eines gemäß der DE-PS-24 58 888 hergestellten innigen Gemisches der Oxide TiO₂ und WO₃ im Gewichtsverhältnis von 9:1 wurden mit 20 Litern Wasser, 6 kg 15 Gew.-%iger wäßriger Ammoniaklösung, 1,8 kg Monoethanolamin und mit einer Ammoniummetavanadatlösung (entsprechend 350 g V₂O₅) versetzt und bei Temperaturen von 70 bis 90°C intensiv geknetet. Anschließend wurden 620 g SiO₂, 1,4 kg alkalifreier Ton und 3,5 kg Glasfasern (Länge 1 bis 8 mm) zugesetzt, 6 bis 8 Stunden unter Zusatz von 410 g Polyethylenoxid, 410 g Carboxymethylcellulose, 230 g Milchsäure und 11,5 kg Wasser zu einer homogenen Knetmasse verknetet, zu monolithischen Wabenkörpern mit Kanälen von quadratischem Querschnitt (Zellteilung: 3,4 mm oder 7,4 mm) extrudiert, bei 20 bis 60°C getrocknet und anschließend nach stufenweiser Temperaturanhebung 24 h bei 620°C calciniert.

### Herstellung der Katalysatoren

### Vergleichskatalysator A

### Herkömmliche Tränkung

1000 g des Grundträgers A wurden mit 0,5 g Palladium getränkt und bei 400°C calciniert.

### Vergleichskatalysator B

### Herkömmliche Tränkung

1000 g des Grundträgers A wurden mit 0,5 g Platin getränkt und bei 400°C calciniert.

1000 g des Grundträgers A wurden mit 0,5 g Platin getränkt und bei 400°C calciniert.

### Katalysator C

1000 g der Knetmasse zur Herstellung des Grundträgers A wurden mit Wasser zu einem Schlicker verdünnt und ein mit Platin getränkter Katalysator gemäß Vergleichsbeispiel B darin getaucht. Dabei wurde die Verdünnung so eingestellt, daß sich durch die Tauchung eine Schicht von ca. 0,1 mm auf den Warmkörper einstellte. Der Katalysator wurde nach den Trocknen der Schicht bei 600°C calciniert.

### Beispiel 1

### Katalytische Entfernung von Ammoniak aus sauerstoffhaltigen Verbrennungsgasen

Ein Stickstoff-Prüfgas mit 10 Vol.-% H₂O, 4 Vol.-% O₂ und 280 ppm NH₃ wurden bei einer Temperatur von 380°C über einen der Katalysatoren A, B oder C geleitet. Die Flächenbelastung AV betrug 30 m/h. Die Ergebnisse sind in der folgenden Tabelle zusammengefaßt.

**Tabelle**

| Katalysator | NH₃-Eintritt [ppm] | NH₃-Austritt [ppm] | NOₓ-Austritt [ppm] |
|---|---|---|---|
| A (Vergleich) | 272 | 140 | 7 |
| B (Vergleich) | 280 | 0 | 119 |
| C | 280 | 11 | 6 |

## Patentansprüche

1. Schalenkatalysatoren bestehend aus einem Kern und mindestens einer äußeren Schale oder aus einem Träger, mindestens einer inneren und mindestens einer äußeren Schale, dadurch gekennzeichnet, daß der Kern oder die inneren Schalen aus Edelmetall enthaltenden Oxidschichten besteht und die äußeren Schalen die Komponenten A und C oder A, B und C enthalten
in der
A ein Oxid der Elemente Titan, Aluminium, Zirkon oder deren Gemische,
B ein Oxid der Elemente Molybdän, Wolfram oder deren Gemische und
C ein Oxid oder Sulfat der Elemente Vanadin, Eisen, Mangan, Nickel, Kobalt, Chrom, Kupfer, Niob, Zinn oder deren Gemische
bedeuten, wobei Träger, Kern und jede Schale gegebenenfalls zusätzlich ein Oxid oder Sulfat der Elemente Silicium, Barium, Zink oder deren Gemische, anorganische Fasern, Ton oder deren Gemische enthält.

2. Schalenkatalysatoren nach Anspruch 1, dadurch gekennzeichnet, daß der Kern oder die innere Schale aus einer Edelmetall enthaltenden Oxidschicht der Komponenten A und C oder A, B und C besteht.

3. Schalenkatalysatoren nach den Ansprüchen 1 bis 2, dadurch gekennzeichnet, daß die Schichtdicke der äußeren Schale 1 bis 3000 µm beträgt.

4. Schalenkatalysatoren nach den Ansprüchen 1 bis 3, dadurch gekennzeichnet, daß die innere Schale oder der Kern 0,001 bis 10 Gew.-% Edelmetall in der Oxidschicht enthält.

5. Schalenkatalysatoren nach den Ansprüchen 1 bis 4, dadurch gekennzeichnet, daß man als Edelmetall Platin, Palladium, Rhodium oder deren Gemische einsetzt.

6. Schalenkatalysatoren nach den Ansprüchen 1 bis 5, dadurch gekennzeichnet, daß die äußere Schicht 50 bis 99,5 Gew.-% Komponente A, 0 bis 30 Gew.-% Komponente B und 0,05 bis 50 Gew.-% Komponente C enthält.

7. Schalenkatalysatoren nach den Ansprüchen 1 bis 6, dadurch gekennzeichnet, daß der Träger aus einer oder mehreren Komponenten von A, B, C oder deren Gemischen, einem inerten Träger [wie beispielsweise Cordiorit oder Mullit] oder einem metallischen Träger mit mindestens einer oxidischen Haftschicht besteht.

8. Schalenkatalysatoren nach den Ansprüchen 1 bis 7 zur Reinigung von Abgasen, insbesondere zur katalytischen Entfernung von Stickstoffoxiden, Kohlenmonoxid und Kohlenwasserstoffen aus sauerstoffhaltigen Verbrennungsgasen unter Zugabe von Ammoniak oder Ammoniak freisetzenden Stoffen, vorzugsweise aus Abgasen aus Verbrennungsmotoren mit O₂-Überschuß, bei Temperaturen von 50 bis 800°C und einem Druck von 0,01 bis 200 bar.

9. Verfahren zur katalytischen Entfernung von Stickstoffoxiden, Kohlenmonoxid und Kohlenwasserstoffen aus sauerstoffhaltigen Verbrennungsgasen, vorzugsweise aus Abgasen aus Verbrennungsmotoren mit O₂-Überschuß, mittels eines Heterogenkatalysators, dadurch gekennzeichnet, daß man einen Schalenkatalysator nach einem der Ansprüchen 1 bis 7 mit dem Abgas bei Temperaturen von 50 bis 800°C und einem Druck von 0,01 bis 200 bar in Kontakt bringt.
